# EUROPEAN PATENT APPLICATION

(11) **EP 4 530 860 A1**
(43) Date of publication of application: **02.04.2025**
(21) Application number: 24192503.1
(22) Date of filing: 02.08.2024
(51) Int. Cl.: G06F 11/34

(54) **INSTRUCTION BLOCK BASED PERFORMANCE MONITORING**

(30) Priority: 30.09.2023 US 202318479027
(71) Applicant: INTEL Corporation, Santa Clara, CA 95054 (US)
(72) Inventor: Doshi, Kshitij Arun, Tempe AZ, 85282 (US); Khanna, Rahul, Portland OR, 97229 (US)
(74) Representative: Samson & Partner Patentanwälte mbB

(57) **Abstract**

Techniques for block based performance monitoring are described. In an embodiment, an apparatus includes execution hardware to execute a plurality of instructions; and block-based sampling hardware. The block-based sampling hardware is to identify, based on a first branch instruction of the plurality of instructions and a second branch instruction of the plurality of instructions, a block of instructions; and to collect, during execution of the block of instructions, performance information.

## Description

### BACKGROUND

On computers and other information processing systems, various techniques may be used to collect data for analyzing performance of hardware and software.

### BRIEF DESCRIPTION OF DRAWINGS

Various examples in accordance with the present disclosure will be described with reference to the drawings, in which:
FIG. 1A illustrates a telemetry system according to embodiments.
FIG. 1B illustrates a processor core supporting block based performance monitoring according to embodiments.
FIG. 2A illustrates a method of instruction-based sampling.
FIG. 2B illustrates a method of block-based sampling according to embodiments.
FIG. 3A illustrates a stackframe when a calling procedure has called another procedure.
FIG. 3B illustrates a value profiling method according to embodiments.
FIG. 4 illustrates an example computing system.
FIG. 5 illustrates a block diagram of an example processor and/or System on a Chip (SoC) that may have one or more cores and an integrated memory controller.
FIG. 6A is a block diagram illustrating both an example in-order pipeline and an example register renaming, out-of-order issue/execution pipeline according to examples.
FIG. 6B is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for instruction block-based performance monitoring. According to some examples, an apparatus includes execution hardware to execute a plurality of instructions; and block-based sampling hardware. The block-based sampling hardware is to identify, based on a first branch instruction of the plurality of instructions and a second branch instruction of the plurality of instructions, a block of instructions; and to collect, during execution of the block of instructions, performance information.

As mentioned in the background section, on computers and other information processing systems, various techniques may be used to collect data for analyzing performance of hardware and software. Difficulties, as described below, using these techniques might impede analysis and optimization at multiple layers of hardware and software.

Overlapped execution of instructions might make it difficult to understand which resource bottlenecks or dependency stalls affect instruction-level parallelism, particularly as instructions with a high range of core execution latencies (such as Intel's AVX512, Intel's AMX, etc.) become more commonly mixed with simple instructions in differing proportions.

Some instruction-based sampling (IBS) techniques (e.g., ProfileMe) might have an "averaging" or "smearing effect" across its sampled collections (e.g., from using tools such as perf, emon, pmc which statistically attribute the contribution of different microarchitectural bottlenecks to the cycles per instruction (CPI) metric as averaged across all instructions), which may make it difficult to get a clear understanding of what issues stall various distinctive classes of instructions (e.g., Intel's AVX, Intel's AMX, AMD's VAES, etc.) at particular points in time (e.g., when there is a sudden rise in or around a particular set of code paths). Synthesizing a path-oriented view may include piecing it together by creating statistical profiles over paths (e.g., by synthesizing a path profile and mapping out the portions of interest from the IBS profiles), thus compounding the problem that adjacent instructions have their IBS profiles collected at different sampling times.

Techniques such as Intel's Top-down Microarchitectural Analysis (TMA) provide stall metrics which can be interpreted across all threads sharing a socket, as they attribute stalls to different primary causes. The analysis is based directly on total event counts of different types (i.e., not based on sampling) but aggregates the effects of microarchitectural stalls among all instructions in each window of execution time, making it difficult to dissect results into small but statistically significant increases in average CPI across different code paths within an application, without assuming that a workload is in a steady state over the window.

Some types of analysis may be centered on traces (instruction traces, system event traces, memory address traces, disk block traces, etc.) because sampling may sometimes be too coarse-grained. Analysis may include correlating traces with each other and with other non-trace outputs in order to identify phenomena that merit drill-downs. Currently, such collection, filtering, and correlation steps are either done in software or require software oversight even when off-loaded to capable hardware.

Different types of traces may be collected together if their memory and central processing unit (CPU) overheads are small, and separately in different executions if it can be assumed that the workload's behaviors are sufficiently repeatable. Similarly, non-trace outputs may be collected separately from one another or together, and separately or together with trace collections, depending on whether these collections can have cross-contaminating effects. If workload patterns are not stable between different executions, these techniques may involve prioritizing which trace and non-trace outputs to collect together for identifying cross-cutting issues.

Correlation between different traces and between traces and non-trace outputs is difficult to draw unless all such traces and other non-trace metrics are contemporaneous (so that they arise out of same execution sequences); however, since many types of traces might be intrusive on workload performance (and distorting what is being traced), contemporaneous collection of all but a few types of traces may be impractical. Collecting multiple (e.g., non-contemporaneous) trace collections and fusing them together may involve careful alignment of the traces so that they cover more or less identical interesting behaviors. As a result these activities may be expert-intensive and error-prone.

Understanding system behaviors might involve awareness of the "data" side, e.g., value profiling. For example, determine whether an application might benefit from being ported to use an accelerator (e.g., Intel's Data Streaming Accelerator or DSA) might involve knowing the distribution of the sizes of its streaming memory operations and the frequency of those memory operations. Similarly, determining whether or not to vectorize a particular computation involves getting a distribution over the parameters with which procedures for performing it are invoked. For example, if ninety percent or more of dot products are done on vectors smaller than a threshold amount (e.g., 32 elements), any speedups from AVX usage might be offset by other costs of setting up data for AVX usage.

Therefore, analysis might involve running instrumented execution (either software/compiler inserted value profiling code or through Pin based dynamic instrumentation which runs a binary through a software emulation of a CPU). With this technique or similar interpretive processes, it might not practical be to do value profiling unless value profiles collected for a small segment of execution are known to be representative of the rest of execution, because this method slows down execution usually by several orders of magnitude and might only be realistically employed at a small scale (e.g., one or a few CPUs, and typically with system-calls emulated out (not instrumentable)).

Analyzing network, input/output (I/O), and/or memory performance might involve monitoring separate event flows and correlating events between them might involve statistical analysis. Dynamics between these subsystems in a production workload (e.g., backpressures due to slower delayed garbage collection) might be missed in such statistical analysis.

The use of embodiments described below may be desired to mitigate the types of difficulties described above, to make efficient and adaptive use of performance monitoring resources in hardware, and to automate the discovery of emergent behaviors of systems and adapt to them without being concerned with overheads and latencies for such automation and adaptation.

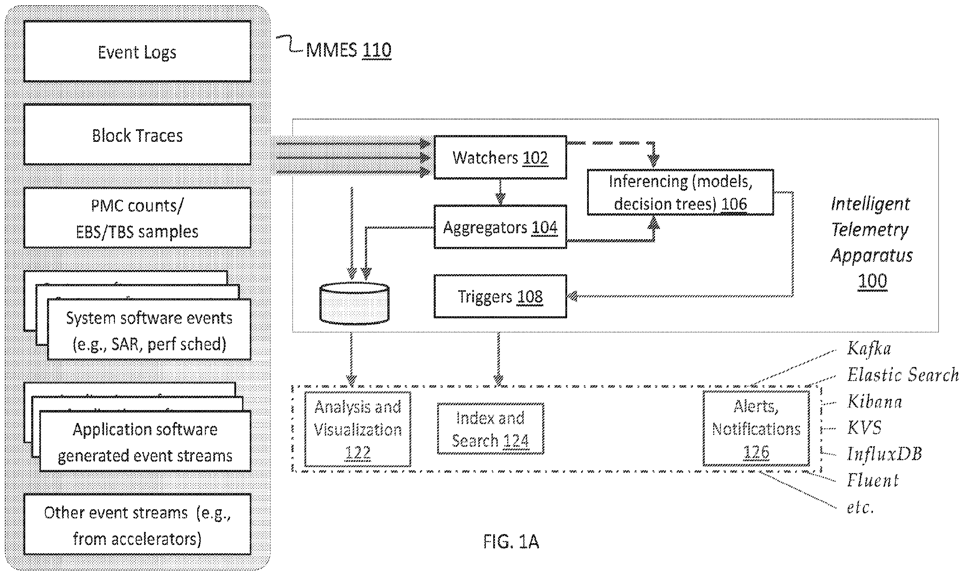

Figure 1A illustrates a telemetry system (intelligent telemetry apparatus 100), such as one that may be called intelligent or actionable because it is energy-efficient, non-invasive, multipoint, multiparty, etc., according to embodiments. Embodiments based on such a telemetry system may minimize the movement of telemetry data and take it through various common programmable actions at low latency, combined with flexible, lightweight, and adaptive monitoring at near real-time with customized filtering and triggering actions.

A telemetry system upon which embodiments may be based may include different types of telemetry which may originate from different sources that may or may not be tightly coupled. Such telemetry may be referred to as multipoint, multiparty telemetry and may include multipoint, multiparty event streams (MMES 110), including but not limited to event logs, block traces, performance monitor counter (PMC) counts, event-based sampling (EBS) samples, time-based sampling (TBS) samples, system software events (e.g., system activity reports (SARs), performance schedules), application software generated event streams, and other event streams (e.g., from accelerators). Telemetry stream sources may include CPUs, accelerators, network interfaces, other hardware units, layers of software stack from supervisory to user level entities (e.g., threads, tasks, modules, utilities, subsystems, etc.). Further, the sources of such telemetry streams for a workload or for a chain of microservices may run on multiple hosts in a cluster, and may further span autonomous execution agents like smart network interface controllers (NICs), smart storage, database appliances, etc.

Intelligent telemetry apparatus 100 may include watchers 102 to receive information from MMES 110, aggregators 104 to aggregate the information, inferencing tools (e.g., models, decision trees, etc.) 106 to be use the raw and/or aggregated data to generate inferences, and triggers 108 to generate triggers based on the inferences. The triggers may be used by various software subsystems such as Kafka, Elastic Search, Kibana, KVS, InfluxDB, Fluent, etc., to provide analysis and visualization 122, index and search 124, and alerts and notification 126, for different goals and to reconcile potentially conflicting requirements and service level objectives across multiple parties (e.g., the owners, respectively, of hardware and networking infrastructure, of virtual machines and containers, of application developers, of systems reliability engineers, software services owners, performance engineers, etc.)

The data from both original telemetry and from the outputs of an intelligent telemetry apparatus may be used, for example, to characterize performance, manage availability and provisioning, isolate throughput, latency, or scaling factors, perform parameter sweeps for optimization, shape or regulate traffic, load-balance, alter software and/or hardware configuration for improving the various figures of merit such as response time, request rates, utilizations, efficiencies, head-rooms, power consumption, etc.

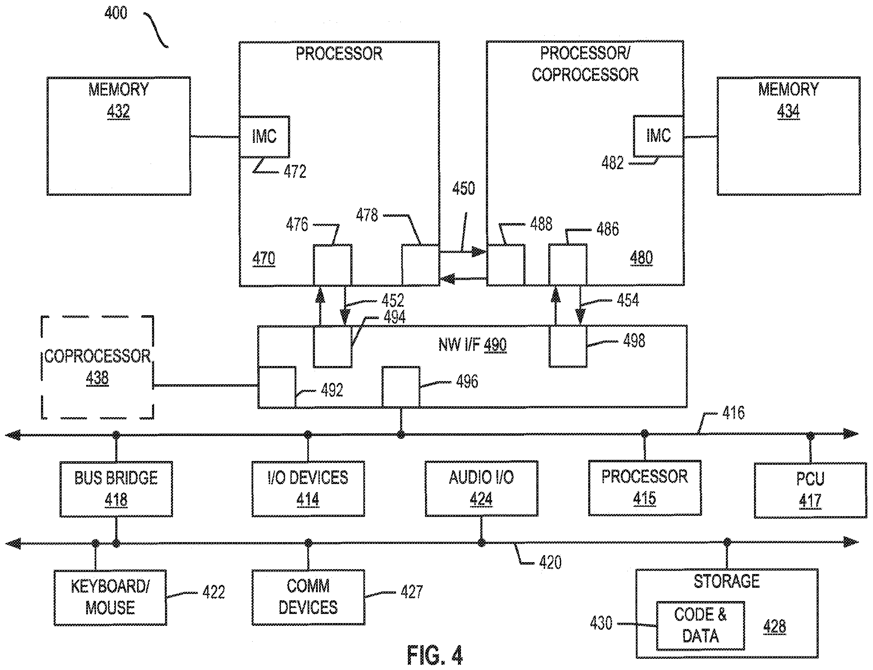

A telemetry system such as intelligent telemetry apparatus 100 may be included in and/or provide information to a computer or information processing system such as system 400 shown in Figure 4, in connection with block based performance monitoring, as further described below, according to embodiments.

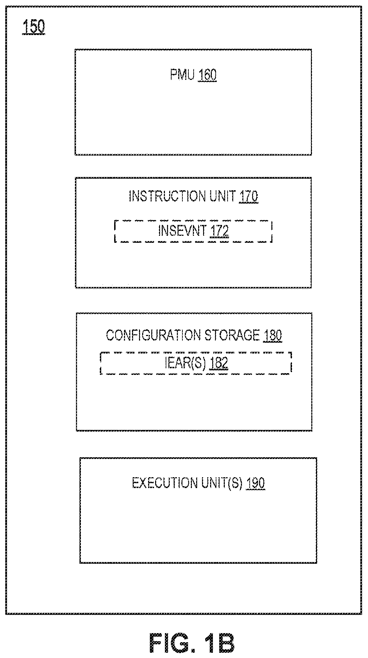

FIG. 1B illustrates a processor core supporting block based performance monitoring, as further described below, according to embodiments. Block based performance monitoring, according to embodiments, may be implemented in a processor, processor core, execution core, etc. which may be any type of processor/core, including a general-purpose microprocessor/core, such as a processor/core in the Intel^{®} Core^{®} Processor Family or other processor family from Intel^{®} Corporation or another company, a special purpose processor or microcontroller, or any other device or component in an information processing system in which an embodiment may be implemented.

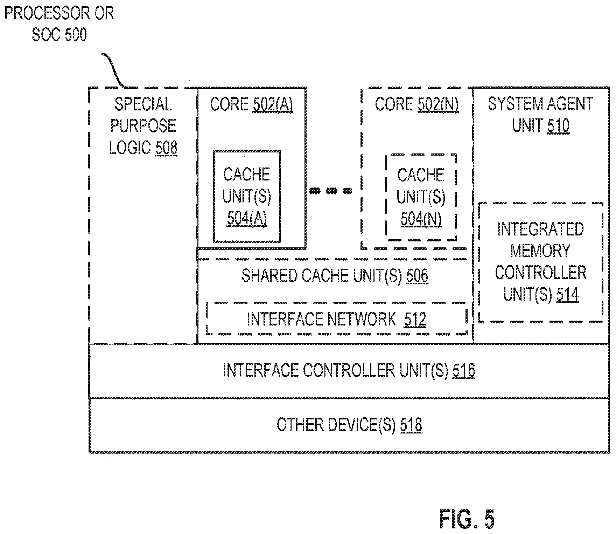

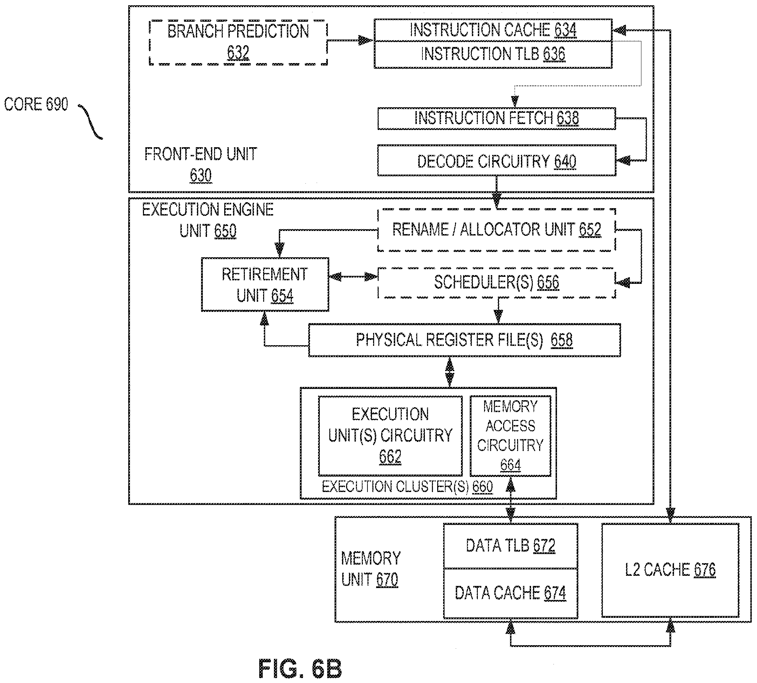

For example, Figure 1B illustrates a processor or processor core 150 (which may represent any of processors 470, 480, or 415 in system 400 in Figure 4, processor 500 or one of cores 502A to 502N in Figure 5, and/or core 690 in Figure 6B) supporting block based performance monitoring according to an embodiment. For convenience and/or examples, some features (e.g., instructions) may be referred to by a name associated with a specific processor architecture (e.g., Intel^{®} 64 and/or IA32), but embodiments are not limited to those features, names, architectures, etc.

As shown, processor core 150 includes performance monitoring unit (PMU) 160, instruction unit 170, configuration storage (e.g., model or machine specific registers (MSRs)) 180, execution unit(s) 190, and any other elements not shown.

PMU 160 may represent and/or include any circuitry, logic gates, structures, and/or other hardware for performance monitoring and/or supporting performance monitoring according to any known technique and/or according to embodiments.

Instruction unit 170 may correspond to and/or be implemented/included in front-end unit 630 in Figure 6B, as described below, and/or may include any circuitry, logic gates, structures, and/or other hardware, such as an instruction decoder, to fetch, receive, decode, interpret, schedule, and/or handle instructions or programming mechanisms, such as an insert event instruction (INSEVNT) as described below represented as block 172 to be executed and/or processed by processor core 150. In Figure 1B, instructions that may be decoded or otherwise handled by instruction unit170 are represented as blocks with broken line borders because these instructions are not themselves hardware, but rather that instruction unit 170 may include hardware or logic capable of decoding or otherwise handling these instructions.

Any instruction format may be used in embodiments; for example, an instruction may include an opcode and one or more operands, where the opcode may be decoded into one or more micro-instructions or micro-operations for execution by an execution unit. Operands or other parameters may be associated with an instruction implicitly, directly, indirectly, or according to any other approach.

Configuration storage 180 may include any one or more MSRs or other registers or storage locations, one or more of which may be within a core and/or one or more of which may be outside of a core (e.g., in an uncore, system agent, etc.) to control processor features, control and report on processor performance, handle system related functions, etc. In various embodiments, one or more of these registers or storage locations may or may not be accessible to application and/or user-level software, may be written to or programmed by software, a basic input/output system (BIOS), etc.

In embodiments, the instruction set of processor core 150 may include instructions to access (e.g., read and/or write) MSRs or other storage, such as an instruction to write to an MSR (WRMSR) and/or instructions to write to or program other registers or storage locations.

In embodiments, configuration storage 230 may include one or more instruction event address registers (IEARs) as described below, which may correspond to MSRs, fields or portions of MSRs, or other programmable storage locations.

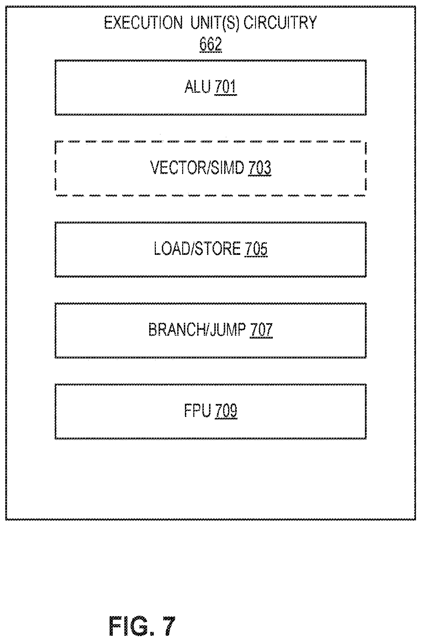

Execution unit(s) 190 may correspond to and/or be implemented/included in execution engine 650 in Figure 6B or execution unit circuitry 662 in Figure 7 as described below.

Embodiments may include hardware support for basic block (e.g., path segments in a graph representation of a computation) and chained-basic-block profiling to extend IBS to operate at basic block granularity and combine it with a variant of timed branch (e.g., Intel's last branch record or LBR) profiling. In embodiments, basic blocks may be treated as "super-instructions" to transform an IBS technique into a basic block based sampling (BBS) or basic block based profiling technique. Provisions of an actionable telemetry system may provide for aggregating a stream of such observations to effectively profile consecutively traversed basic blocks by focusing attention on a path segment by path segment basis rather than on current techniques of instruction sampling.

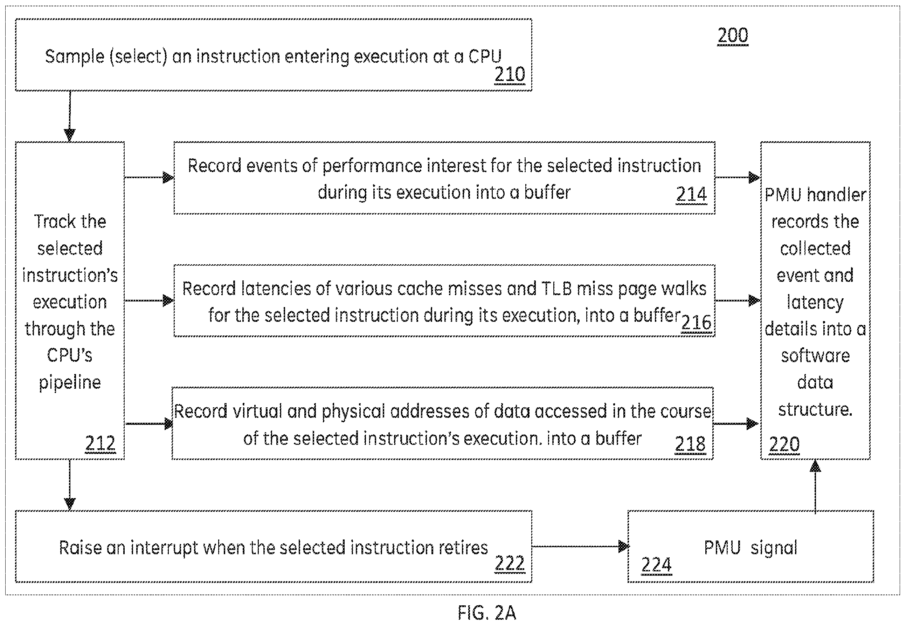

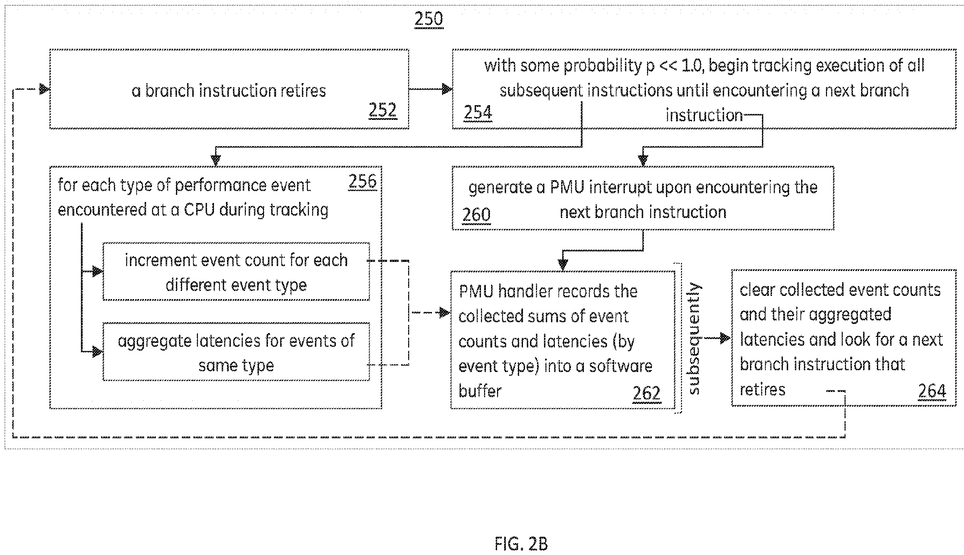

For example, Figure 2A shows a method 200 of IBS that may be extended to a method 250 of BBS according to embodiments as shown in Figure 2B. In Figure 2A, from time to time (e.g., at some configured frequency or sample after value for instruction count) processor hardware (e.g., a performance monitoring unit or PMU) selects (in 210) an instruction and tracks (in 212) it so that micro-operations resulting from it, including its data access steps are monitored (in 216) for such things as their translation lookaside buffer (TLB) hits or misses, cache hits or misses, data access latencies, various data addresses (in 218) it generates during its execution (214), and so on. When it reaches retirement, this record of everything that was tracked is transferred (in 220) to a data structure in response to a signal from the PMU (in 224) generated via the raising and handling of an interrupt (in 222). An implementation may employ buffering so that interrupt frequency can be reduced. Thus, for a representative sample of instructions executed and retired, copious detail gets recorded (like a "day in the life of an instruction") and one then generalizes to say that various correlations or ratios observed across sampled, retiring instructions are also applicable to all instructions including those that did not get selected and tracked. Intuitively, a key benefit of this approach is that different events being correlated have an underlying common factor in that they are statistically related to one another by virtue of being tied to a common population of tracked instructions.

Similar approaches include ProfileMe, which uses paired sampling to investigate adjacent instructions as a whole and considers the overlaps between instructions, and Intel's processor event-based sampling (PEBS), for collecting and analyzing memory load events (e.g., cache and TLB misses) in the context of instructions tracked to retirement.

Embodiments extend the above concepts beyond single instructions to multiple instruction based sampling using a new sampling unit, a basic block. In highly vectorized code which may use masked operations, basic blocks may become quite substantial in the number of cycles or numbers of micro-operations at the CPU, but the counting itself may be very economical. In embodiments, BBS involves sampling retiring branch instructions which signal the start of a basic block and continuing to track until the next branch instruction that retires. A BBS method 250 according to an embodiment is illustrated in Figure 2B.

In 252 of method 250, a branch instruction retires. In 254, tracking of instructions subsequent to the branch instruction begins. In 256, for each type of performance event encountered during tracking, the event count for that type of performance event is incremented and latencies for events of a same type are aggregated. In 260, a PMU interrupt is generated in response to the next branch instruction. In 262, a PMU handler records the collected sums of event counts and latencies (by event type) into a software buffer (e.g., in response to a trigger generated in 260). In 264, event counts and latencies are cleared in preparation for retirement of the next branch instruction.

In embodiments, method 250 may be extended to cover loops that are successive iterations of the same basic block (high frequency basic block loops) and treat such loops as mega-BBS profiling. For example, multiple back-to-back branch retirements (e.g., in 252 of method 250) which have the same target branch address may be chained. It may also be extended by extending LBR (and/or timed LBR) based profiling to construct path profiles and aggregate path metrics (e.g., when one side of a branch is taken with overwhelming frequency, thus paths become pseudo-basic-blocks).

Thus, embodiments may provide for chained tracking by regarding basic blocks as a compound unit of sequential execution of micro-operations, larger in granularity than just the micro-ops that are instruction-associated. Basic blocks may include most of the data dependencies within themselves, while branches between basic blocks delineate control flow dependencies and left over data dependencies (not fully captured in one basic block). Basic loops profiling and pseudo-basic-block profiling bring IBS very close to the richness of tracing but without the high overheads. Embodiments may also provide an increased surface area for sampling and profiling as it becomes common to employ inlining and silent branch elimination through masks, conditional moves, etc., in optimization techniques. Comprehensive optimizations like inlining may expand the scope of what gets captured in a basic block, and the use of predicated operations (e.g., with masks in AVX and as conditional moves flatten out a lot of control dependencies in performance critical code paths).

In embodiments, basic blocks, basic loops, pseudo-basic-blocks may be treated as compound instructions whose execution stalls are better correlated against other basic blocks as a whole, rather than to constituent instructions, particularly since a basic block can include within it a wide spectrum of instruction complexities, from instructions that may have very few front-end effects and whose stalls are almost all backend resources related at one extreme, to instructions that may be many tens of cycles long (e.g., AMX instructions) and which may hide a lot of cache miss latencies owing to their data and operation parallelism.

Embodiments may also include a new insert-event instruction (INSEVNT), which, for example, may be used to insert an event describing data structure into a logical position in a trace record. This data structure may have one or more fields that permit linking one or more trace streams to be correlated. The fields may also permit a trace stream to be correlated with a most recent value output from a sequence (e.g., watch-aggregate-filter) programmed by software into an actionable telemetry system. In combination, these features may be used in embodiments to create a "super-trace" stream in which individual traces are augmented with timely non-trace outputs and with links into cognate points in other trace streams.

Such embodiments provide for inserting software counters and events into hardware collected event traces and crosslinking traces with one another and with general non-trace outputs from actionable telemetry. Non-trace outputs may include interval metrics such as instructions retired, LLC cache misses, clock cycles, cache hits/misses, etc., and/or their ratios like CPI, LLC misses per instruction (LLCMPI), etc., and/or their linear/exponential moving window averages, etc. Traces and events may each be represented by handles, with runtime dynamic mappings between a trace handle and a stream offset in that trace handle where an event handle is to be inserted.

In embodiments, an INSEVNT instruction format may include an INSEVNT opcode field, a first operand field for a handle (EHANDLE), and a second operand field for a trace (TRC).

In embodiments, a mapping between an EHANDLE and a data record or a mapping between a TRC and the insertion point in the trace referred to by TRC (where the event is to be inserted) may be provided by a software utility routine (e.g., in a performance library), so that different forms of traces and event insertion mechanisms may be abstracted from their low level implementation details.

In embodiments, an EHANDLE may implicitly map to a data record. That record may be flat and/or a cacheline-aligned and cacheline-sized unit (e.g., 64-bytes), but other variations are possible. As an example, a 64-byte record may include the fields shown in Table 1.

**Table 1**

| Field | Description |
|---|---|
| Event type | A type code for the event. |
| Event subtype | A sub-type code for various event subtypes within a type. |
| Event value | An interpreted value, whose representation may vary according to type code for the event (e.g., positive rational, boolean, etc.). Some event data records may have no event-value if an event is just a linking event. |
| Event parent handle | A reference to a parent event, which may be inserted in the current trace referred to by TRC, or in a different trace |
| Event extend | Event records that need additional storage (for extensibility) and which are therefore placed in trace with their parent handles pointing to a first event whom they are continuing. |
| Event HRT | A high resolution time (HRT) to be associated with the event |
| Co-event handle | Link to a second handle which may or may not be inserted into a different trace stream. |
| Co-Event trace handle | The handle for the trace into which the co-event is inserted. |

In embodiments, the data structure associated with the event being inserted may be constructed by the caller of the INSEVNT instruction. Execution of the INSEVNT instruction may set a ZERO flag if it fails (e.g., because TRC is an invalid value). TRC may be a memory address that is either valid or invalid. If valid, then it is a memory mapped channel at which the active telemetry mechanism receives inserted events. If not valid, then that means either the active telemetry mechanism is not currently active or is in the process of being turned off.

The use of embodiments may be desired to provide a capability to insert events and cross-link them, beyond the PTWRITE capability in Intel Processor Trace (IPT). Whereas PTWRITE injects a particular metric like LLCMPI into an IPT record which has a very specific structure that is designed for compact representation of instruction addresses/offsets, embodiments including INSEVNT may provide a general event trace that may have a very flexible structure depending on watchers, aggregators, loggers, etc. This generalization may confer an ability to introduce in-stream trace elements logically (e.g., there may be an umbrella data structure that indexes into an event trace and associates those indexes with other data items that are created by software to amalgamate software counters from system software (e.g., an operating system), libraries, and/or applications, and software events such as log entries, along with event traces). Therefore, embodiments provide software with the flexibility to associate information in a parallel buffer and tie each index with a handle. Further, by cross-linking between events inserted into different traces or into same trace at different insertion points, embodiments provide for isolating (e.g., by time) which segments of which traces are contemporaneous with one another, thus simplifying online analysis that may need to refer to multiple traces.

Other telemetry capabilities may be provided in these or other embodiments, which may also or instead include one or more new configuration registers (or other storage locations), which may be per CPU, per core, etc. Each of the configuration registers may be used to specify a call-branch target and a positional index among that call-branch target's arguments (e.g., identifying one of its parameters). A mechanism may be triggered at the time that a retiring call instruction causes the instruction pointer to reach the specified call-branch target, and this mechanism may read the corresponding positional parameter value and furnish it to an actionable telemetry watcher component which updates the value profile that has been collected up to the current time. Thus, hardware may be programmed to pluck out a parameter value just-in-time (e.g., at procedure invocation time) and get it processed by actionable telemetry mechanisms without disrupting or slowing down the executing application.

Such embodiments may provide for aggregation (e.g., software guided) of parameter values (e.g., in software call stacks) for low-overhead, flexible value profiling. Use of embodiments may be desired in performance investigation and optimization cases in which it is frequently insightful to be able to profile software behaviors by intercepting parameter values at key procedure calls in different software layers (including, but not limited to syscall parameters). In highly layered code, heavily templated code, and polymorphic languages, in which instrumenting code paths in order to extract parameters and build histograms, percentiles, and other statistical properties of call parameters might not be trivial, use of embodiments may be preferred over an alternative approach of running instruction by instruction emulation using such tools as Valgrind, Pin, SDE, etc., which may distort the speed of execution (e.g., by orders of magnitude) and scale at which profiling can be done.

In embodiments, a mechanism as further described below may be given a code address at which to sample statistically so that one in a number (e.g., 100, 1000, etc.) call frames are collected and the parameter value extracted for profiling.

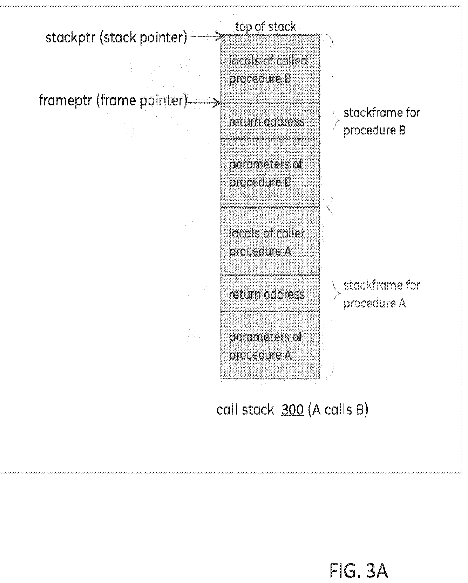

Figure 3A shows a stackframe 300 (or call frame layout or call stack) when a calling procedure A has called another procedure B. In some cases a framepointer may be optimized out in order to be able to use a register (e.g., %rbp) for general usages. Regardless, for the top frame in the stack, it may be relatively straight-forward to extract the parameter locations from the standardized layout (not considering cases where calls (e.g., function calls) get in-lined, as that may involve additional support from software and a compiler. The layout for call stackframes may vary between different compiler options, language application binary interfaces (ABIs), and so on, but in each case is documented and knowable at runtime.

A value profiling method according to embodiments may be implemented in software (e.g., for low frequency sampling) and in programmed hardware under actionable telemetry (e.g., for high frequency sampling and non-disruptive aggregation into histograms for callee procedures and their parameters of interest). For ease of description, a hardware-assisted lightweight approach is described first, followed by a simplified but lower frequency sampling variation of it without hardware assistance.

According to a hardware-assisted approach, setup includes providing (e.g., by an actionable telemetry system) to software a small number of instruction event address registers (IEARs) which a software tool uses in order to specify which procedures and which parameter(s) of those procedures for which to extract a value distribution. For example, the position of the kth parameter is from the stackpointer value at the time of entry into a function is known as shown in Figure 3A (e.g., the kth value below the offset for the return address). Then, software may choose when to activate or deactivate the programmed setup, which allows a software tool to control the range of time or conditions under which call parameter profiles are to be extracted.

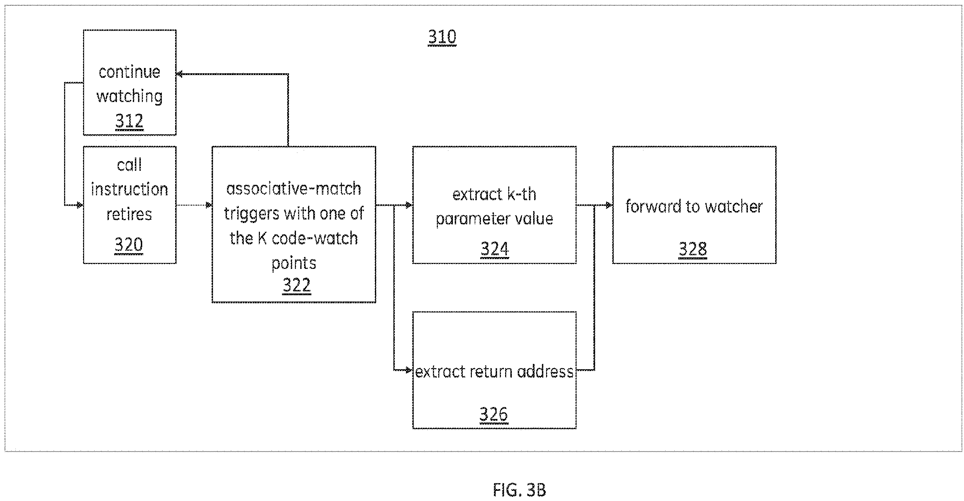

When activated, the hardware assist (which may be an extension of PMU logic) works as shown in Figure 3B. Method 310 includes watching for and sampling of call instructions, as represented by 312. In 320, a call instruction retires. In 322, it is determined that the target of a call-branch matches one of the programmed and activated IEARs. In response, in 324, the desired parameter value is extracted (e.g., by processor microarchitecture) by offsetting the correct distance from the current register stack pointer (the correct distance may be pre-computed, as described above, and entered into the IEAR ahead of time). Also in response, in 324, the return address is extracted. In 326, the parameter value and the return address are forwarded to the watcher. The return address may be useful in cases when there is a need to disambiguate between different parameter profiles according to multiple caller-callee relationships so that aggregation is performed only along some and not all paths into the callee.

A software-only alternative may be implemented by scripting a debugger. Instead of new IEARs and hardware to perform the method described above, software may program one of the available debug registers to watch for the desired callee entry point. It would then read the stack location at the desired offset when the callee entry point is hit and write out the value of the parameter into a buffer. It would also extract the return address and place it in the buffer as well. It would then suspend the debugger for a length of time before repeating the same process. A separate thread would run from time to time and harvest the buffer's contents and perform different desired aggregations directly in software since the frequency with which the buffer needs to be harvested can be coarse grained in the software alternative.

According to a further extension, the software method may accept four parameters: a callee entry point address, its parameter to profile, numbers of indirections to perform on that parameter to reach the value to profile, and the type of aggregation to perform on that value. This approach provides for profiling of values that may not appear directly in the arguments to a function but are pointer-chained down from one of those arguments. Optionally, the software-based indirect value profiling mechanism is also kept fault tolerant so that it catches a segment violation signal delivered by the OS (e.g., SIGSEGV) and terminates the profiling gracefully if it reaches an unmapped value as a result of such indirections.

Additionally or alternatively, a software-only approach may be applied through scripting (e.g., with extended or enhanced Berkeley Packet Filtering or eBPF), where the callees are tracepoints or probe points exposed for monitoring (e.g., eBPF-based).

Example apparatuses, methods, etc.

According to some examples, an apparatus (e.g., a processing device or system) includes execution hardware to execute a plurality of instructions; and block-based sampling hardware. The block-based sampling hardware is to identify, based on a first branch instruction of the plurality of instructions and a second branch instruction of the plurality of instructions, a block of instructions; and to collect, during execution of the block of instructions, performance information.

Any such examples may include any or any combination of the following aspects. The block-based sampling hardware is to identify a start of the block of instructions in response to retirement of the first branch instruction. The block-based sampling hardware is to identify an end of the block of instructions in response to retirement of second branch instruction. Collecting performance information is to include counting occurrences of a type of event. Collecting performance information is to include aggregating latencies for a type of event. The performance information is to be collected into a trace record. The apparatus also includes an instruction decoder to decode an insert event instruction, wherein in response to the insert event instruction, the block-based hardware is to insert a data structure into the trace record. The insert event instruction is to indicate a handle to the data record. The insert event instruction is to indicate an insertion point in the trace record. The apparatus also includes a storage location to store an instruction event address. The instruction event address is based on a call branch target. The instruction event address is also based on an index associated with a parameter of the call branch target. The block-based sampling hardware is also to trigger updating a value profile in response to a match in connection with retirement of a call branch instruction. The block-based sampling hardware is also to perform pointer dereferencing in connection with call parameter profiling.

According to some examples, a method includes identifying, by block-based sampling hardware, based on a first branch instruction of a plurality of instructions and a second branch instruction of the plurality of instructions, a block of instructions; and collecting, by the block-based sampling hardware during execution of the block of instructions, performance information.

Any such examples may include any or any combination of the following aspects. Identifying the block of instructions includes identifying a start of the block of instructions in response to retirement of the first branch instruction. The performance information is collected into a trace record, and the method also includes inserting a data structure into the traces record in response to an insert event instruction. The method of also includes updating a value profile in response to an instruction event address match in connection with retirement of a call branch instruction

According to some examples, a system includes a telemetry system; execution hardware to execute a plurality of instructions; and block-based sampling hardware to identify, based on a first branch instruction of the plurality of instructions and a second branch instruction of the plurality of instructions, a block of instructions; and to collect, during execution of the block of instructions, telemetry information from the telemetry system.

Any such examples may include any or any combination of the following aspects. The block-based sampling hardware is to identify a start of the block of instructions in response to retirement of the first branch instruction. The block-based sampling hardware is to identify an end of the block of instructions in response to retirement of second branch instruction. Collecting performance information is to include counting occurrences of a type of event. Collecting performance information is to include aggregating latencies for a type of event. The performance information is to be collected into a trace record. The system also includes an instruction decoder to decode an insert event instruction, wherein in response to the insert event instruction, the block-based hardware is to insert a data structure into the trace record. The insert event instruction is to indicate a handle to the data record. The insert event instruction is to indicate an insertion point in the trace record. The system also includes a storage location to store an instruction event address. The instruction event address is based on a call branch target. The instruction event address is also based on an index associated with a parameter of the call branch target. The block-based sampling hardware is also to trigger updating a value profile in response to a match in connection with retirement of a call branch instruction

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples, a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

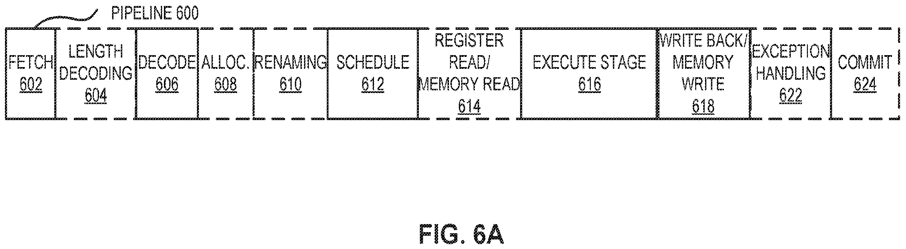

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

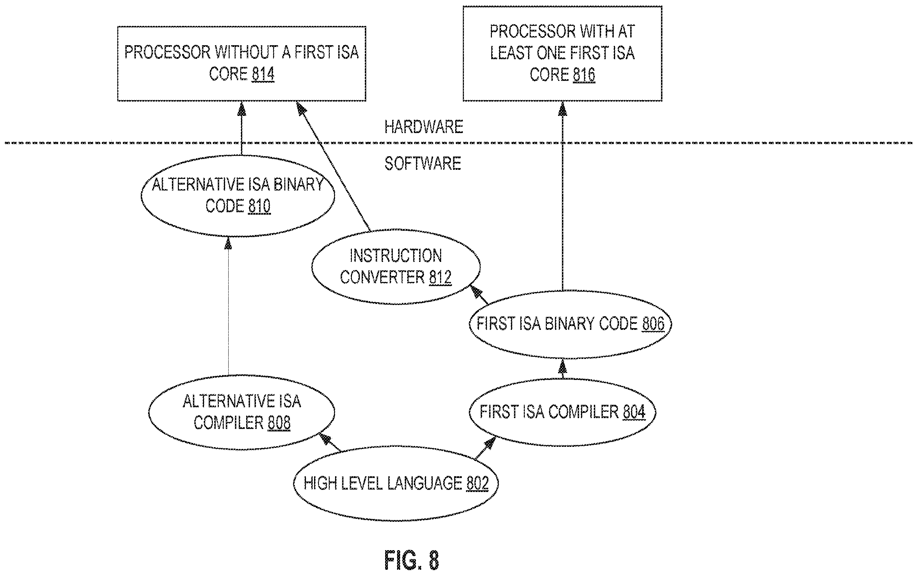

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
execution hardware to execute a plurality of instructions; and
block-based sampling hardware:
to identify, based on a first branch instruction of the plurality of instructions and a second branch instruction of the plurality of instructions, a block of instructions; and
to collect, during execution of the block of instructions, performance information.

2. The apparatus of claim 1, wherein the block-based sampling hardware is to identify a start of the block of instructions in response to retirement of the first branch instruction.

3. The apparatus of claim 2, wherein the block-based sampling hardware is to identify an end of the block of instructions in response to retirement of second branch instruction.

4. The apparatus of any of claims 1-3, wherein collecting performance information is to include counting occurrences of a type of event.

5. The apparatus of any of claims 1-4, wherein collecting performance information is to include aggregating latencies for a type of event.

6. The apparatus of any of claims 1-5, wherein the performance information is to be collected into a trace record, further comprising an instruction decoder to decode an insert event instruction, wherein in response to the insert event instruction, the block-based hardware is to insert a data structure into the trace record.

7. The apparatus of claim 6, wherein the insert event instruction is to indicate a handle to the data record.

8. The apparatus of claim 6 or 7, wherein the insert event instruction is to indicate an insertion point in the trace record.

9. The apparatus of any of claims 1-8, further comprising a storage location to store an instruction event address based on a call branch target.

10. The apparatus of claim 9, wherein the instruction event address is also based on an index associated with a parameter of the call branch target.

11. The apparatus of claim 9 or 10, wherein the block-based sampling hardware is to trigger updating a value profile in response to a match in connection with retirement of a call branch instruction.

12. A method comprising:
identifying, by block-based sampling hardware, based on a first branch instruction of a plurality of instructions and a second branch instruction of the plurality of instructions, a block of instructions; and
collecting, by the block-based sampling hardware during execution of the block of instructions, performance information.

13. The method of claim 12, wherein identifying the block of instructions includes identifying a start of the block of instructions in response to retirement of the first branch instruction.

14. A system comprising:
a telemetry system;
execution hardware to execute a plurality of instructions; and
block-based sampling hardware:
to identify, based on a first branch instruction of the plurality of instructions and a second branch instruction of the plurality of instructions, a block of instructions; and
to collect, during execution of the block of instructions, telemetry information from the telemetry system.

15. The system of claim 14, wherein the performance information is to be collected into a trace record, the system further comprising an instruction decoder to decode an insert event instruction, wherein in response to the insert event instruction, the block-based hardware is to insert a data structure into the trace record.
